# EUROPEAN PATENT APPLICATION

(11) **EP 1 563 976 A1**
(43) Date of publication of application: **17.08.2005**
(21) Application number: 03756666.8
(22) Date of filing: 17.10.2003
(51) Int. Cl.: B29C 33/38, B29C 45/26

(54) **METAL MOLD DEVICE, METHOD OF MANUFACTURING THE METAL MOLD DEVICE, MOLDING METHOD, MOLDED PRODUCT, AND MOLDING MACHINE**

(30) Priority: 17.10.2002 JP 2002303293
(71) Applicant: SUMITOMO HEAVY INDUSTRIES, LTD., Shinagawa-ku, Tokyo 141-8686 (JP)
(72) Inventor: IMATOMI, Yoshiyuki, Tomisato-shi, Chiba 286-0201 (JP)
(74) Representative: Emde, Eric
(86) International application number: PCT/JP2003/013295
(87) International publication number: WO 2004/035285

(57) **Abstract**

An object is to enhance the durability of a mold apparatus (14) and to lower the cost of the mold apparatus (14). The mold apparatus (14) includes a first mold and a second mold, which is disposed in such a manner as to be able to advance toward or retreat from the first mold. At least either the first mold or the second mold has a sintered portion having a predetermined thickness. In this case, since the sintered portion having a predetermined thickness is formed on at least either the first or second mold, when the mold apparatus (14) is used repeatedly, wear of a sliding surface can be prevented, whereby the durability of the mold apparatus (14) can be enhanced. Because of lack of need to perform a coating process, such as plating or vapor deposition, not only can work of manufacturing the mold apparatus (14) be simplified, but also time required for manufacturing the mold apparatus (14) can be shortened. Accordingly, the cost of the mold apparatus (14) can be lowered.

## Description

### TECHNICAL FIELD

The present invention relates to a mold apparatus, a method for manufacturing the same, a molding method, a molded product, and a molding machine.

### BACKGROUND ART

Conventionally, a molding machine; for example, an injection molding machine, is configured so as to function as follows: resin that is melted through application of heat in a heating cylinder is injected under high pressure into a cavity of a mold apparatus so as to fill the cavity; the injected resin is cooled and set within the cavity; and the resultant molded product is released from the mold apparatus.

The injection molding machine includes a mold apparatus, a clamping apparatus, and an injection apparatus. The mold apparatus includes a stationary mold and a movable mold. The clamping apparatus includes a stationary platen, a movable platen, and a mold-clamping motor. The mold-clamping motor, when activated, causes the movable platen to advance toward or retreat from the stationary platen so as to move the movable mold toward or away from the stationary mold, whereby the mold apparatus is closed, clamped, or opened.

The injection apparatus includes the heating cylinder for melting resin fed from a hopper through application of heat, and an injection nozzle for ejecting molten resin. A screw, which serves as an injection member, is disposed in the heating cylinder in such a manner as to be rotatable and able to advance and retreat. In an injection step, an injection motor is activated so as to advance the screw, whereby resin is ejected from an injection nozzle. In a metering step, a metering motor is activated so as to rotate and retreat the screw, whereby resin is metered.

Meanwhile, a compression molding machine is an injection molding machine in which resin that fills a cavity is compressed for improving quality of a molded product, and functions as follows: a movable mold is advanced for mold closing, to thereby form a cavity; resin is caused to fill the cavity; and the movable mold is advanced further for mold clamping, to thereby compress the resin in the cavity. In order to prevent leakage of resin from the cavity during filling of the cavity with the resin, a weir member is disposed.

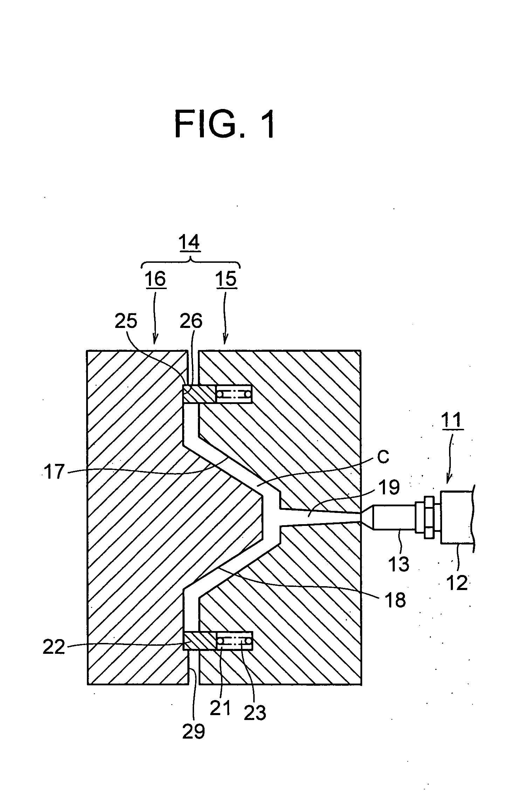

FIG. 1 is a sectional view showing essential portions of a conventional compression molding machine.

In FIG. 1, reference numeral 11 denotes an injection apparatus; reference numeral 12 denotes a heating cylinder; reference numeral 13 denotes an injection nozzle disposed at the front end (left end in FIG. 1) of the heating cylinder 12; reference numeral 14 denotes a mold apparatus; reference numeral 15 denotes a stationary mold attached to an unillustrated stationary platen; reference numeral 16 denotes a movable mold attached to an unillustrated movable platen; reference numeral 17 denotes a cavity wall formed in the stationary mold 15; and reference numeral 18 denotes a core formed on the movable mold 16 and projecting toward the cavity wall 17.

An unillustrated clamping apparatus causes the movable platen to advance or retreat so as to advance or retreat (move rightward or leftward in FIG. 1) the movable mold 16, whereby the mold apparatus 14 can be closed, clamped, or opened. When the mold apparatus 14 is closed, the cavity wall 17, the core 18, and an annular weir member 22 define a cavity C between the stationary mold 15 and the movable mold 16. A sprue 19 is formed in the stationary mold 15 in such a manner as to communicate with the cavity C.

An annular groove 21 is formed on a surface, in opposition to the movable mold 16, of a peripheral portion of the stationary mold 15; the weir member 22, which forms the outer circumferential edge of the cavity C, is disposed in the groove 21 in such a manner as to be able to advance and retreat; and a spring 23 accommodated in the groove 21 and serving as a biasing member urges the weir member 22 toward the movable mold 16. In order to prevent the weir member 22 from coming out of the groove 21, an unillustrated stopper is formed on the portion of the groove 21 so as to latch the weir member 22. A surface, in opposition to the stationary mold 15, of a peripheral portion of the movable mold 16 has the following geometric features: in order to receive the front end surface (left end surface in FIG. 1) of the weir member 22, an annular contact portion 26 is formed; a stepped portion 25 is formed at the outer circumferential edge of the contact portion 26; and an annular projection 29 is formed outside, in the radial direction, of the stepped portion 25 in such a manner as to project toward the stationary mold 15 by a predetermined distance.

In the initial condition of the thus-configured compression molding machine, the weir member 22 projects from the front end surface of the stationary mold 15 by a predetermined distance. When the mold-clamping motor is activated so as to advance (move rightward in FIG. 1) the movable mold 16 for mold closing as illustrated, first, the front end surface of the weir member 22 abuts the contact portion 26, thereby forming the cavity C. When the movable mold 16 is advanced further by a predetermined distance, the weir member 22 is retreated (moved rightward in FIG. 1) against the biasing force of the spring 23 by a distance equal to the distance of further advancement of the movable mold 16. Thus, the weir member 22 is inserted into the groove 21 and pressed against the contact portion 26 more strongly by the biasing force of the spring 23.

Subsequently, when unillustrated resin is ejected from the injection nozzle 13, the resin passes through the sprue 19 and fills the cavity C. At this time, since the weir member 22 is pressed against the contact member 26 by the aforementioned biasing force, the resin does not leak out from the cavity C.

Next, when the movable mold 16 is advanced further for mold clamping, the weir member 22 is retreated further. Accordingly, the core 18 advances toward the cavity wall 17, and the projection 29 abuts the front end surface of the stationary mold 15, so that the resin in the cavity C is compressed. Subsequently, the resin in the cavity C is cooled to become a molded product.

Subsequently, when the movable mold 16 is retreated (moved leftward in FIG. 1) for mold opening, the molded product retreats while adhering to the movable mold 16. Then, when an unillustrated ejector pin disposed in the movable mold 16 is advanced to eject the molded product, the molded product is released from the movable mold 16, thereby being taken out from the mold apparatus 14.

In association with mold opening, the weir member 22, which has been inserted into the groove 21, is advanced (moved leftward in FIG. 1) and projects from the front end surface of the stationary mold 15 by a distance equal to that in the initial condition.

In the conventional mold apparatus 14, in association with mold opening and closing, the weir member 22 is advanced and retreated relative to the stationary mold 15; in other words, the weir member 22 is caused to be inserted into the groove 21 and to project from the groove 21.

Accordingly, an inner circumferential surface of the groove 21 and an outer circumferential surface of the weir member 22 slide on each other. During repeated use of the mold apparatus 14, the sliding surfaces consisting of the inner circumferential surface of the groove 21 and the outer circumferential surface of the weir member 22 wear, resulting in impaired durability of the mold apparatus 14.

In order to cope with the problem, base materials of the groove 21 and the weir member 22 having sliding surfaces are subjected to a coating process, such as plating or vapor deposition, so as to form a wear-resistant coating layer on each of the sliding surfaces. Wear of the sliding surfaces is thus suppressed.

However, before the coating process, such as plating or vapor deposition, is performed, the base materials must be treated by ultrasonic cleaning, masking, or the like. After plating, vapor deposition, or the like is performed, the surfaces of the coating layers must be cleaned. Accordingly, not only do man-hours increase, but also time required for forming the coating layers becomes very long, since the amount of deposition of a coating material on the base material per unit time is very small. As a result, the cost of the mold apparatus 14 increases.

Also, since the coating layer formed by the coating process, such as plating or vapor deposition, is thin, the coating layer is susceptible to the condition of the base material. For example, when the base material thermally expands, the coating layer undergoes separation or is strained. Accordingly, the durability of the mold apparatus 14 drops.

An object of the present invention is to solve the above-mentioned problems in the conventional mold apparatus and to provide a mold apparatus allowing an enhancement in durability and a reduction in cost, a method for manufacturing the same, a molding method, a molded product, and a molding machine.

### DISCLOSURE OF THE INVENTION

To achieve the above object, a mold apparatus of the present invention comprises a first mold, and a second mold disposed in such a manner as to be able to advance toward or retreat from the first mold.

At least either the first mold or the second mold has a sintered portion having a predetermined thickness.

In this case, since the sintered portion having a predetermined thickness is formed on at least either the first or second mold, when the mold apparatus is used repeatedly, wear of a sliding surface can be prevented, whereby the durability of the mold apparatus can be enhanced.

Because of lack of need to perform a coating process, such as plating or vapor deposition, not only can work of manufacturing the mold apparatus be simplified, but also time required for manufacturing the mold apparatus can be shortened. Accordingly, the cost of the mold apparatus can be lowered.

In another mold apparatus of the present invention, the sintered portion is formed on at least a sliding surface.

In a further mold apparatus of the present invention, the sintered portion is formed on at least a contact surface between a base portion and an insert.

In a still further mold apparatus of the present invention, the sintered portion is formed by means of sintering a sintering powder and comprises a base layer formed from a first material and an outermost layer formed from a second material.

In yet another mold apparatus of the present invention, the first and second materials have different characteristics.

In another mold apparatus of the present invention, the second material has high wear resistance.

In a further mold apparatus of the present invention, an intermediate layer formed from a material containing the first and second materials at predetermined contents is formed between the base layer and the outermost layer.

In a still further mold apparatus of the present invention, in the intermediate layer, the contents of the first and second materials are varied between a side toward the base layer and a side toward the outermost layer.

In yet another mold apparatus of the present invention, the sliding surface comprises a first sliding surface and a second sliding surface formed from respective materials of different characteristics.

According to a method for manufacturing a mold apparatus of the present invention, a mold apparatus is formed by means of discharge-plasma-sintering a powder used to form a base layer, and a wear-resistant material powder used to form an outermost layer.

A molding method of the present invention comprises a step of advancing a movable mold toward a stationary mold while a sintered portion formed on at least either the movable mold or the stationary mold slides on the other mold, thereby forming a cavity to be filled with a molding material between the movable mold and the stationary mold; a step of filling the cavity with the molding material; a step of cooling the molding material filling the cavity; and a step of retreating the movable mold from the stationary mold.

According to another molding method of the present invention, a molded product is molded by means of a stamper provided on at least one mold selected from a movable mold and a stationary mold, the stamper having a fine pattern formed thereon.

The molding method comprises a step of advancing the movable mold toward the stationary mold; a step of forming a cavity to be filled with a molding material between the movable mold and the stationary mold; a step of filling the cavity with the molding material, and causing the stamper to expand in a state in which the stamper is in contact with a stamper contact surface of the selected mold; a step of cooling the molding material filling the cavity, and causing the stamper to contract in a state in which the stamper is in contact with the stamper contact surface; and a step of retreating the movable mold from the stationary mold.

A molded product of the present invention is formed by a molding method according to claim 11 or 12.

A molding machine of the present invention comprises a mold apparatus according to any one of claims 1 to 3.

### BRIEF DESCRIPTION OF THE DRAWINGS

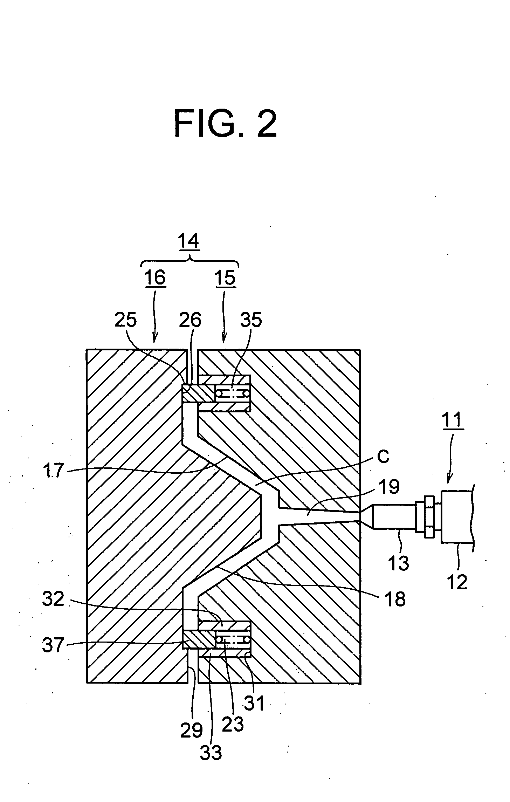

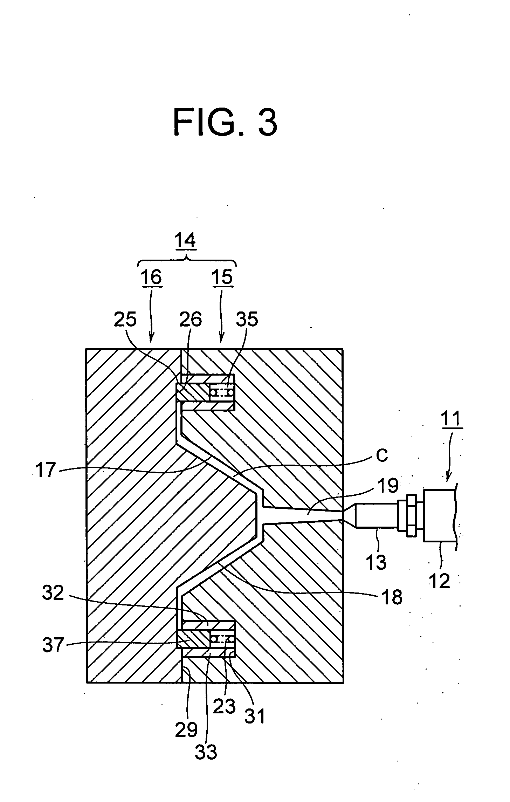

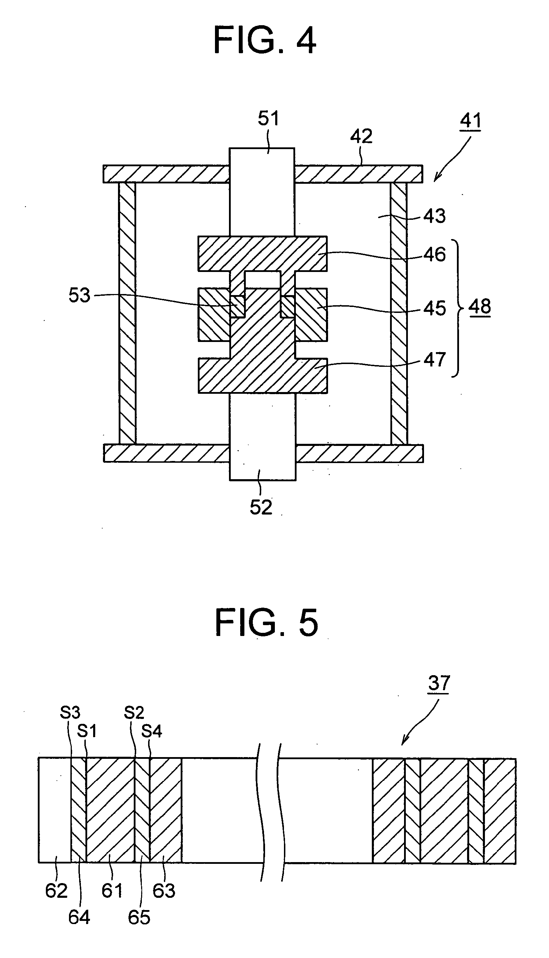

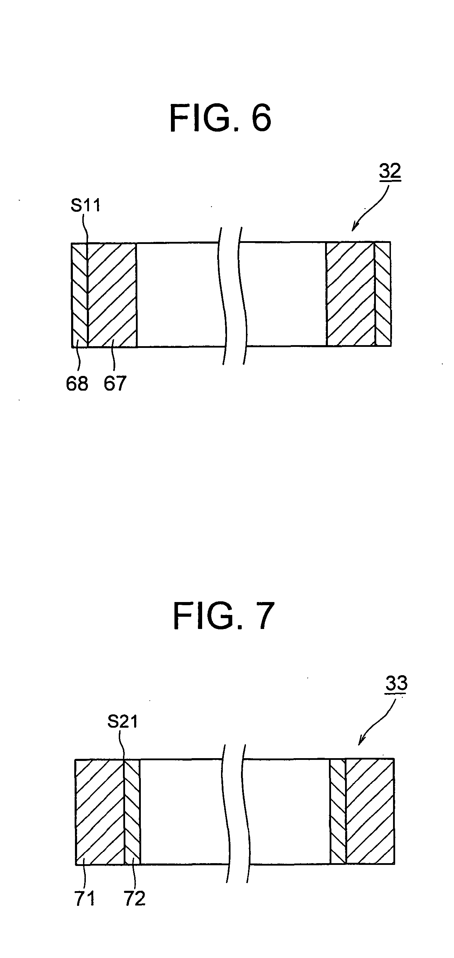

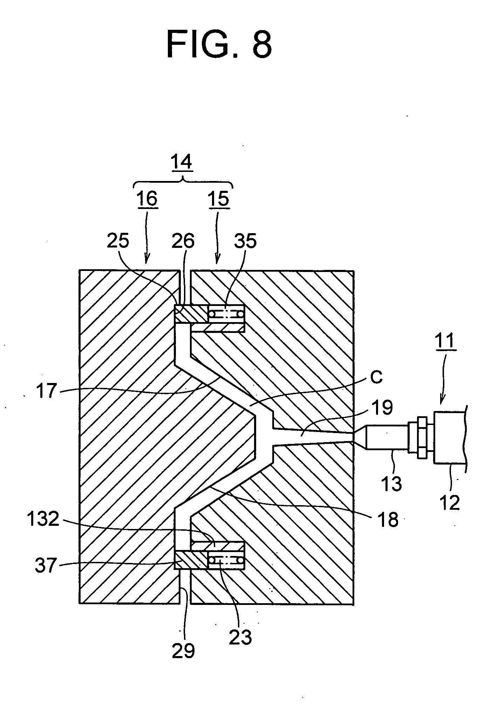

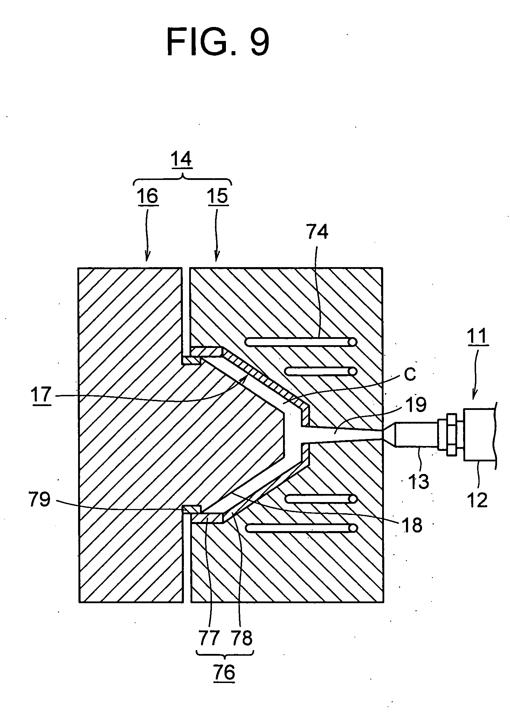

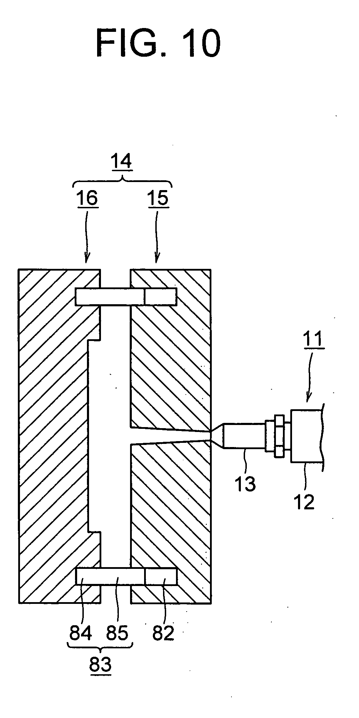

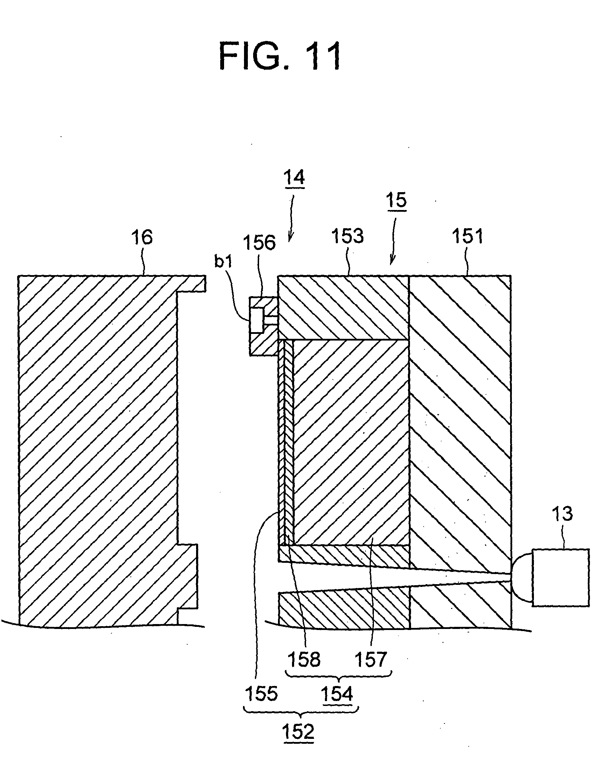

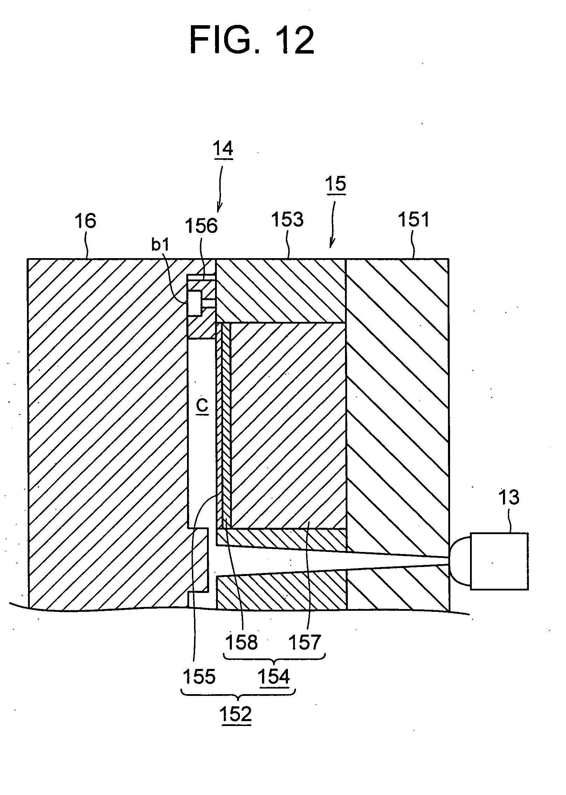

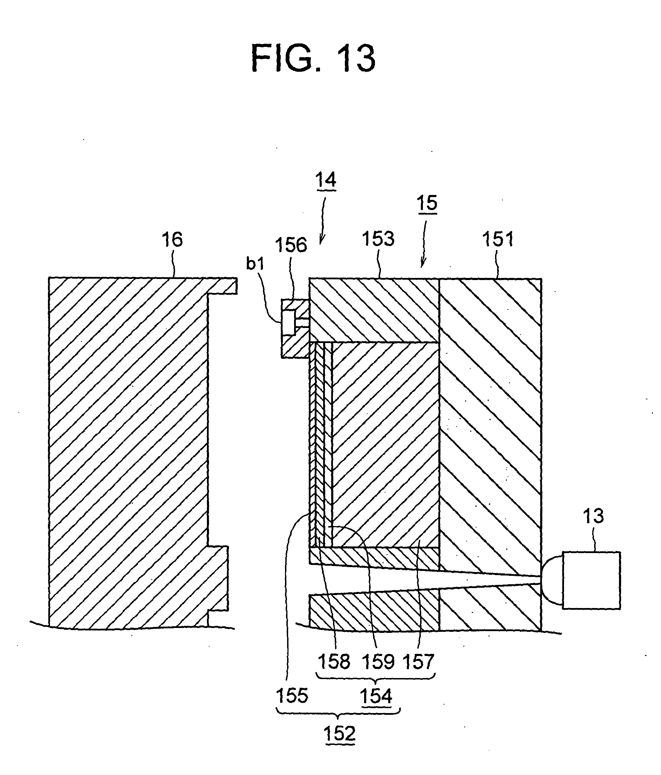

FIG. 1 is a sectional view showing essential portions of a conventional compression molding machine; FIG. 2 is a sectional view showing a state of a compression molding machine in a first embodiment of the present invention as viewed at the time of start of mold closing; FIG. 3 is a sectional view showing a state of the compression molding machine in the first embodiment of the present invention as viewed at the time of mold clamping; FIG. 4 is a conceptual view of a discharge plasma sintering apparatus in the first embodiment of the present invention; FIG. 5 is a sectional view of a weir member in the first embodiment of the present invention; FIG. 6 is a sectional view of a first sliding member in the first embodiment of the present invention; FIG. 7 is a sectional view of a second sliding member in the first embodiment of the present invention; FIG. 8 is a sectional view showing a state of a compression molding machine in a second embodiment of the present invention as viewed at the time of start of mold closing; FIG. 9 is a sectional view showing essential portions of an injection molding machine in a third embodiment of the present invention; FIG. 10 is a sectional view showing essential portions of an injection molding machine in a fourth embodiment of the present invention; FIG. 11 is a sectional view showing a state of an injection molding machine in a fifth embodiment of the present invention as viewed before start of mold closing; FIG. 12 is a sectional view showing a state of the injection molding machine in the fifth embodiment of the present invention as viewed at the time of mold clamping; and FIG. 13 is a sectional view showing a state of an injection molding machine in a sixth embodiment of the present invention as viewed before start of mold closing.

### BEST MODE FOR CARRYING OUT THE INVENTION

The embodiments of the present invention will next be described in detail with reference to the drawings. In this case, an injection molding machine will be described as an example molding machine.

FIG. 2 is a sectional view showing a state of a compression molding machine in a first embodiment of the present invention as viewed at the time of start of mold closing, and FIG. 3 is a sectional view showing a state of the compression molding machine in the first embodiment of the present invention as viewed at the time of mold clamping.

In FIGS. 2 and 3, reference numeral 11 denotes an injection apparatus. The injection apparatus 11 includes a heating cylinder 12 serving as a cylinder member and adapted to melt, through application of heat, unillustrated resin serving as a molding material and fed from an unillustrated hopper; an injection nozzle 13 disposed at the front end (left end in FIGS. 2 and 3) of the heating cylinder 12 and adapted to eject molten resin; and an unillustrated screw serving as an injection member and disposed in the heating cylinder 12 in such a manner as to be rotatable and able to advance and retreat. In an injection step, an unillustrated injection motor serving as an injection drive section is activated so as to advance the screw, whereby resin is ejected from the injection nozzle 13. In a metering step, an unillustrated metering motor serving as a metering drive section is activated so as to rotate the screw, whereby resin is advanced through the heating cylinder 12 to thereby be metered, and the screw is retreated.

Reference numeral 14 denotes a mold apparatus; reference 15 denotes a stationary mold serving as a first mold and attached to an unillustrated stationary platen; reference numeral 16 denotes a movable mold serving as a second mold, attached to an unillustrated movable platen, and disposed in such a manner as to be able to advance toward and retreat from the stationary mold 15 (to move rightward and leftward in FIGS. 2 and 3); reference numeral 17 denotes a cavity wall formed in the stationary mold 15; reference numeral 18 denotes a core formed on the movable mold 16 and projecting toward the cavity wall 17; and reference letter C denotes a cavity defined by the cavity wall 17, the core 18, and an annular weir member 37.

An unillustrated mold-clamping apparatus includes the stationary platen, the movable platen, and a mold-clamping motor serving as a mold-clamping drive section. The mold-clamping motor is activated so as to advance the movable platen toward or retreat the movable platen from the stationary platen, thereby advancing the movable mold 16 toward or retreating the movable mold 16 from the stationary mold 15. By so doing, the mold apparatus 14 is closed, clamped, or opened.

In the compression molding machine, which is a type of an injection molding machine, when the movable mold 16 is advanced (moved rightward in FIG. 2) for mold closing, the cavity C is formed between the stationary mold 15 and the movable mold 16. A sprue 19 is formed in the stationary mold 15 in such a manner as to communicate with the cavity C.

An annular groove 31 is formed on a surface, in opposition to the movable mold 16, of a peripheral portion of the stationary mold 15; an annular first sliding member 32 is disposed in the groove 31 in such a manner as to be attached by adhering to the radially inward circumferential surface of the groove 31; and an annular second sliding member 33 is disposed in the groove 31 in such a manner as to be attached by adhering to the radially outward circumferential surface of the groove 31. In the present embodiment, the first and second sliding members 32 and 33 are disposed by adhering attachment. However, the first and second sliding members 32 and 33 may be disposed by means of bonding, welding, or tightening by use of fixing members such as bolts.

An annular sliding groove 35 is formed between the first and second sliding members 32 and 33 in the groove 31; the weir member 37, which forms the outer circumferential edge of the cavity C, is disposed in the sliding groove 35 in such a manner as to be able to advance and retreat; and a spring 23 accommodated in the sliding groove 35 and serving as a biasing member urges the weir member 37 toward the movable mold 16. In order to prevent the weir member 37 from coming out of the groove 35, an unillustrated stopper is formed on the first and second sliding members 32 and 33 so as to latch the weir member 37. A surface, in opposition to the stationary mold 15, of a peripheral portion of the movable mold 16 has the following geometric features: in order to receive the front end surface (left end surface in FIG. 2) of the weir member 37, an annular contact portion 26 is formed; a stepped portion 25 is formed at the outer circumferential edge of the contact portion 26; and an annular projection 29 is formed outside, in the radial direction, of the stepped portion 25 in such a manner as to project toward the stationary mold 15 by a predetermined distance. The first and second sliding members 32 and 33 and the weir member 37 constitute a portion of the stationary mold 15.

In the initial condition of the thus-configured compression molding machine, the weir member 37 projects from the front end surface of the stationary mold 15 by a predetermined distance. When the mold-clamping motor is activated so as to advance the movable mold 16 for mold closing, first, as shown in FIG. 2, the contact portion 26 abuts the front end surface of the weir member 37, thereby forming the cavity C on the radially inward side of the weir member 37. When the movable mold 16 is advanced further by a predetermined distance, the weir member 37 is retreated (moved rightward in FIG. 2) against the biasing force of the spring 23 by a distance equal to the distance of further advancement of the movable mold 16. Thus, the weir member 37 is inserted into the sliding groove 35 and pressed against the contact portion 26 by the biasing force of the spring 23. At this point of time, the projection 29 is not in contact with the front end surface of the stationary mold 15.

Subsequently, resin is ejected from the injection nozzle 13; passes through the sprue 19; and fills the cavity C. At this time, since the weir member 37 is pressed against the contact member 26 by the aforementioned biasing force, the resin does not leak out from the cavity C.

Next, when the movable mold 16 is advanced further for mold clamping, as shown in FIG. 3, the weir member 37 is retreated further, and the projection 29 abuts the front end surface of the stationary mold 15. In association with this, the core 18 advances toward the cavity wall 17, so that the resin in the cavity C is compressed. Subsequently, the resin in the cavity C is cooled to become a molded product.

In this case, since the resin that fills the cavity C is compressed, pressure distribution in the resin contained in the cavity C becomes uniform, thereby suppressing occurrence of residual stress in a molded product. Accordingly, occurrence of warpage or the like of the molded product can be prevented, thereby enhancing the quality of the molded product.

Subsequently, when the movable mold 16 is retreated (moved leftward in FIG. 3) for mold opening, the molded product retreats while adhering to the movable mold 16. Then, when an unillustrated ejector pin disposed in the movable mold 16 is advanced to eject the molded product, the molded product is released from the movable mold 16, thereby being taken out from the mold apparatus 14.

In association with mold opening, the weir member 37, which has been inserted into the sliding groove 35, is advanced toward the movable mold 16 and projects from the front end surface of the stationary mold 15 by a distance equal to that in the initial condition.

As described above, in association with advancement and retreat of the movable mold 16 for mold closing and opening, the weir member 37 is advanced and retreated relative to the stationary mold 15; in other words, the weir member 37 is caused to be inserted into the sliding groove 35 and to project from the sliding groove 35. Accordingly, the advancement and retreat of the weir member 37 involves sliding between the outer circumferential surface of the first sliding member 32 and the inner circumferential surface of the weir member 37 and sliding between the inner circumferential surface of the second sliding member 33 and the outer circumferential surface of the weir member 37.

In order to prevent wear of the sliding surfaces consisting of the outer circumferential surface of the first sliding member 32, the inner circumferential surface of the weir member 37, the inner circumferential surface of the second sliding member 33, and the outer circumferential surface of the weir member 37 during repeated use of the mold apparatus 14, a discharge plasma sintering process is employed for manufacturing the first and second sliding members 32 and 33 and the weir member 37. By means of discharge-plasma-sintering a sintering powder of a wear resistant material, the first and second sliding members 32 and 33, which serve as sintered portions having a predetermined thickness, are formed on at least the stationary mold 15 or the movable mold 16; in the present embodiment, on the stationary mold 15, and also the weir member 37 is formed.

In the present embodiment, the entire first and second sliding members 32 and 33 and the entire weir member 37 are formed as sintered portions. However, they may be formed in such a manner that at least a sliding surface assumes the form of a sintered portion.

Next will be described a discharge plasma sintering apparatus for manufacturing the first and second sliding members 32 and 33, the weir member 37, and the like by a discharge plasma sintering process. In this case, the first and second sliding members 32 and 33, the weir member 37, and the like are manufactured in the form of sintered bodies.

FIG. 4 is a conceptual view of a discharge plasma sintering apparatus in the first embodiment of the present invention.

In FIG. 4, reference numeral 41 denotes a discharge plasma sintering apparatus, and reference numeral 42 denotes a sealed cylindrical casing. A chamber 43 in the casing 42 is connected to an unillustrated vacuum pump, which serves as a vacuum source. Activation of the vacuum pump creates a vacuum in the chamber 43. In the present embodiment, a vacuum is created within the casing 42. However, the casing 42 may be filled with an inert gas, such as argon gas. A cooling pipe is disposed in the wall of the casing 42. Unillustrated cooling water, which serves as a cooling medium, circulates through the cooling pipe, thereby cooling the chamber 43.

Reference numeral 45 denotes a cylindrical die formed from an electrically conductive material; for example, graphite. Rodlike upper and lower punches 46 and 47, which serve as first and second punches, are disposed above and below the die 45. The upper and lower punches 46 and 47 are formed from an electrically conductive material; for example, graphite. The upper punch 46 and the lower punch 47 are disposed in opposition to each other, and an unillustrated projection or recess is formed on their mutually facing end surfaces in accordance with the shape of a sintered body to be manufactured. The die 45, the upper punch 46, and the lower punch 47 constitute a sintering die 48.

In the present embodiment, graphite is used to form the die 45, the upper punch 46, and the lower punch 47. However, in place of graphite, an electrically conductive material having a melting point of 1,100 °C or higher, such as tungsten (W), molybdenum (Mo), or carbon (C), may be used.

An upper electrode 51, which serves as a first electrode, extends vertically upward from the upper punch 46. A lower electrode 52, which serves as a second electrode, extends vertically downward from the lower punch 47.

An unillustrated cooling pipe is disposed within each' of the upper and lower electrodes 51 and 52. The aforementioned cooling water circulates through the cooling pipes, thereby cooling the upper and lower electrodes 51 and 52 and indirectly cooling the die 45 via the upper and lower punches 46 and 47. An unillustrated temperature sensor, which serves as a temperature detection section, is disposed at a predetermined position of the die 45. The temperature sensor detects the temperature of the die 45.

The upper and lower electrodes 51 and 52 are disposed in a vertically movable condition. An unillustrated press mechanism is connected to the upper end of the upper electrode 51 and to the lower end of the lower electrode 52. Pressing force generated by the press mechanism is transmitted to the upper electrode 51 and to the lower electrode 52 in such a manner as to move the upper electrode 51 downward and the lower electrode 52 upward.

A sintering powder 53 is charged into a closed-bottomed charge chamber (which, in the present embodiment, assumes an annular shape corresponding to the shape of a sintered body), which is defined by the die 45 and the lower punch 47 and serves as a charge space. The press mechanism is activated so as to move the upper and lower electrodes 51 and 52, thereby pressing the sintering powder 53 by the pressing force. A servomotor, a reduction gear, or the like is used as a pressing drive section of the press mechanism. However, a hydraulic cylinder, a pneumatic cylinder, or the like may be used instead.

In order to detect the positions of the upper and lower electrodes 51 and 52, an unillustrated position sensor, which serves as a position detection section, is disposed adjacent to each of the upper and lower electrodes 51 and 52. The position sensors detect the positions of the upper and lower electrodes 51 and 52.

An unillustrated control section is disposed in order to generate predetermined pressing force by means of the press mechanism, to transmit the pressing force to the upper and lower electrodes 51 and 52, and to apply predetermined voltage between the upper electrode 51 and the lower electrode 52 in a predetermined pulse form from an unillustrated power source. The control section is connected to the press mechanism and the power source.

In the thus-configured discharge plasma sintering apparatus 41, discharge plasma sintering is performed as follows. First, the upper electrode 51 is moved upward, whereby the upper punch 46 is moved upward to thereby open the upper end of the die 45. The sintering powder 53 of a predetermined material is charged into the charge chamber.

Subsequently, the upper punch 46 and the upper electrode 51 are moved downward to thereby close the charge chamber. Then, pressing-process means of the control section performs a pressing process so as to activate the press mechanism, thereby moving the upper and lower electrodes 51 and 52 for pressing the sintering powder 53 by predetermined pressing force. Voltage application process means of the control section performs a voltage application process so as to activate the power source, thereby applying electricity between the upper electrode 51 and the lower electrode 52 in a pulse form for about 10 minutes. For example, a voltage of 0.1 V to 5 V is applied between the upper electrode 51 and the lower electrode 52, and a DC pulsed current of about 1,000 A to 8,000 A flows therebetween. The present embodiment employs DC pulsed current. However, there may be employed current of rectangular waves, triangular waves, trapezoidal waves, or the like, or alternating current. Alternatively, constant current may be applied for a certain period of time.

As a result, the sintering powder 53 is heated to a temperature of about 500 °C to 3,000 °C and sintered into a sintered body by discharge plasma. In this case, heat is generated at contact points among particles of the sintering powder 53, whereby the particles are bonded together. In order to facilitate handling of the sintering powder 53, a predetermined binder is added to the sintering powder 53. When pulsed current flows, the added binder is blown off.

In this case, current flows through a first current path of upper electrode 51 - upper punch 46 - sintering powder 53 - lower punch 47 - lower electrode 52; a second current path of upper electrode 51 - upper punch 46 - die 45 - lower punch 47 - lower electrode 52; and a third current path of upper electrode 51 - upper punch 46 - sinteringpowder/die interface (interface between the sintering powder 53 and the die 45) - lower punch 47 - lower electrode 52. By means of appropriately controlling current that flows through each of the first to third current paths, the sintering powder 53 can be appropriately sintered.

Subsequently, after slight delay, the die 45, the upper punch 46, and the lower punch 47 are heated by Joule heat to thereby retain heat of the sintered body. Subsequently, cooling water fed from a cooling system cools the sintered body, thereby completing the sintered body. Notably, the sintered body undergoes heat retaining for about 10 minutes to 53 minutes and is cooled for about 53 minutes.

Subsequently, the upper punch 46 and the upper electrode 51 are moved upward, and the sintered body is taken out from the charge chamber.

Meanwhile, according to the discharge plasma sintering process, the sintering powder 53 is charged into the charge chamber and then sintered into a sintered body. When the sintering powder 53 is of a single material, sintered bodies having a single kind of characteristic is manufactured. When the sintering powder 53 is in the form of a combination of a plurality of materials, by means of varying arrangement of the materials at the time of charging the sintering powder 53, sintered bodies having various kinds of characteristics can be manufactured. Sliding surfaces that slide on each other can consist of, for example, a first sliding surface formed from a first material and a second sliding surface formed from a second material, the first and second materials having different characteristics.

The discharge plasma sintering process facilitates formation of a sliding surface having an even thickness and required to have relatively high accuracy, such as a sliding surface of the mold apparatus 14. As compared with other sintering processes, such as a hot pressing sintering process, the discharge plasma sintering process has advantages of high temperature rise rate and capability to complete sintering in a short period of time and to form sintered bodies of high density. Accordingly, as compared with plating, vapor deposition, and other coating processes applied to conventional sliding surfaces, the discharge plasma sintering process can enhance durability and wear resistance of the mold apparatus 14.

Next will be described the weir member 37 (FIG. 2), which is manufactured by sintering the sintering powder 53 in the form of a combination of first and second materials.

FIG. 5 is a sectional view of the weir member in the first embodiment of the present invention.

In FIG. 5, reference numeral 37 denotes the weir member; reference numeral 61 denotes a base layer formed from a material having a predetermined characteristic and serving as a first layer; reference numeral 62 denotes a layer located outermost; i.e., an outermost layer, formed from a material of high wear resistance and serving as a second layer; reference numeral 63 denotes a layer located innermost; i.e., an innermost layer, formed from a material of high wear resistance and serving as a third layer; reference numeral 64 denotes a first transition layer formed between the base layer 61 and the outermost layer 62; and reference numeral 65 denotes a second transition layer formed between the base layer 61 and the innermost layer 63. The first and second transition layers 64 and 65 serve as intermediate layers. In the present embodiment, the base layer 61, the outermost layer 62, the innermost layer 63, the first transition layer 64, and the second transition layer 65 are formed in such a manner that adjacent layers are bonded together by means of sintering. A first bonding surface S1 is formed between the base layer 61 and the first transition layer 64; a second bonding surface S2 is formed between the base layer 61 and the second transition layer 65; a third bonding surface S3 is formed between the outermost layer 62 and the first transition layer 64; and a fourth bonding surface S4 is formed between the innermost layer 63 and the second transition layer 65.

In the present embodiment, the base layer 61 is formed from a material having high rigidity and toughness; e.g., SUS304, and serving as a first material. The outermost layer 62 and the innermost layer 63 are formed from a material having high wear resistance; e.g., titanium nitride (TiN), and serving as a second material. For use as the first material, SUS304 can be replaced with copper (Cu), titanium (Ti), or the like. For use as the second material, titanium nitride can be replaced with titanium oxide (TiO₂), boron nitride (BN), zirconium nitride (ZrN), cemented carbide (WC/Co), cubic boron nitride (CBN), zirconia (zirconium oxide ZrO₂), alumina (aluminum oxide Al₂O₃), silica (silicon dioxide SiO₂), titania (titanium dioxide TiO₂), silicon nitride (Si₃N₄), chromium oxide (CrO, Cr₂O₃, or CrO₃), cordierite, or the like.

The inner and outer circumferential surfaces, which serve as sliding surfaces, of the weir member 37 are formed on the innermost and outermost layers 63 and 62. Accordingly, in repeated use of the mold apparatus 14 (FIG. 2), wear of the sliding surfaces can be prevented, thereby enhancing the durability of the mold apparatus 14.

Because of lack of need to perform a coating process, such as plating or vapor deposition, not only can work of manufacturing the weir member 37 be simplified, but also time required for manufacturing the weir member 37 can be shortened. Accordingly, the cost of the mold apparatus 14 can be lowered.

Since the outermost layer 62 and the innermost layer 63 can be rendered sufficiently thick, the outermost and innermost layers 62 and 63 are unlikely to be susceptible to the condition of the base layer 61. For example, even when the base layer 61 thermally expands, the outermost layer 62 and the innermost layer 63 are free from separation and are not strained. Accordingly, the durability of the mold apparatus 14 can be enhanced.

Since the weir member 37 has the base layer 61, and the base layer 61 is formed from a material of high rigidity and toughness, the weir member 37 can have high rigidity and toughness.

In the present embodiment, the weir member 37 is composed of the base layer 61, the outermost layer 62, the innermost layer 63, and the first and second transition layers 64 and 65. However, the weir member 37 can be formed from a single material of high wear resistance; e.g., titanium nitride.

In the present embodiment, the base layer 61 is formed from a material having high rigidity and toughness and serving as the first material. However, the base layer 61 can be formed from a material of high heat-insulating ability; e.g., ceramic, such as zirconia or alumina. In this case, since the heat-insulating ability of the weir member 37 can be enhanced, radiation of heat of resin filling the cavity C via the weir member 37 can be suppressed. Accordingly, occurrence of residual stress in a molded product can be prevented, thereby improving the quality of the molded product.

In the case where ceramic is used as the first material, the base layer 61 is formed from ceramic, whereas the outermost layer 62 and the innermost layer 63 are formed from a metal. Accordingly, in this case, direct bonding of the base layer 61 to the outermost layer 62 and to the innermost layer 63 causes generation of excessive stress in the bonded portions stemming from temperature variations, resulting in poor bonding performance. Consequently, cracking, warpage, or a like problem arises in the weir member 37. In order to cope with the problem, preferably, the first transition layer 64 sandwiched between the base layer 61 and the outermost layer 62, and the second transition layer 65 sandwiched between the base layer 61 and the innermost layer 63 are formed from a material that contains the materials used to form the base layer 61, the outermost layer 62, and the innermost layer 63; e.g., zirconia and titanium nitride, in an amount of 50 wt.% each. In this case, the performance of bonding of the base layer 61 to the outermost layer 62 and to the innermost layer 63 can be improved, so that the base layer 61, the outermost layer 62, and the innermost layer 63 do not separate from one another.

The first and second transition layers 64 and 65 can assume a multilayer structure such that zirconia and titanium nitride contents are varied stepwise or continuously.

Next will be described the first sliding member 32, which is manufactured by sintering the sintering powder 53 (FIG. 4) in the form of a combination of first and second materials.

FIG. 6 is a sectional view of the first sliding member in the first embodiment of the present invention.

In FIG. 6, reference numeral 32 denotes a first sliding member; reference numeral 67 denotes a base layer formed from a material having a predetermined characteristic and serving as a first layer, and reference numeral 68 denotes an outermost layer formed from a material of high wear resistance and serving as a second layer. In the present embodiment, the base layer 67 and the outermost layer 68 are adjacent to each other and bonded together by means of sintering. A bonding surface S11 is formed between the base layer 67 and the outermost layer 68.

In the present embodiment, the base layer 67 is formed from a material having high rigidity and toughness, serving as a first material, and having affinity for a material used to form the main body of the stationary mold 15 (FIG. 2). The outermost layer 68 is formed from a material having high wear resistance.

Since the outer circumferential surface, which serves as a sliding surface, of the first sliding member 32 is formed on the outermost layer 68, in repeated use of the mold apparatus 14, wear of the sliding surface can be prevented, thereby enhancing the durability of the mold apparatus 14.

Since the material for the base layer 67 has affinity for a material used to form the main body of the stationary mold 15, good workability is provided in terms of attachment of the first sliding member 32 to the stationary mold 15.

Since the outer circumferential surface of the first sliding member 32 slides on the weir member 37 that advances and retreats, the outer circumferential surface; i.e., the sliding surface, of the first sliding member 32 is formed from a material of high wear resistance. In this case, preferably, hardness differs between a material used to form the inner circumferential surface; i.e., the sliding surface, of the weir member 37 and a material used to form the outer circumferential surface; i.e., the sliding surface, of the first sliding member 32. For example, in the case where the innermost layer 63 (FIG. 5) of the weir member 37 is formed from titanium nitride, the outermost layer 68 of the first sliding member 32 is formed from a material whose hardness is lower than that of titanium nitride. The outer circumferential surface; i.e., the sliding surface, of the first sliding member 32 serves as a first sliding surface. The inner circumferential surface; i.e., the sliding surface, of the weir member 37 serves as a second sliding surface.

Since hardness differs between a material used to form the inner circumferential surface; i.e., the sliding surface, of the weir member 37 and a material used to form the outer circumferential surface; i.e., the sliding surface, of the first sliding member 32, galling between the weir member 37 and the first sliding member 32 can be prevented.

By means of employing hardness difference between mutually sliding components; e.g., between the first sliding member 32 and the weir member 37, and employing a material of lower hardness for a component whose replacement is easy, even when the component wears, the component can be readily replaced. Thus, the maintenance of the mold apparatus 14 can be completed in a short period of time.

Next will be described the second sliding member 33, which is manufactured by sintering the sintering powder 53 (FIG. 4) in the form of a combination of first and second materials.

FIG. 7 is a sectional view of the second sliding member in the first embodiment of the present invention.

In FIG. 7, reference numeral 33 denotes a second sliding member; reference numeral 71 denotes a base layer formed from a material having a predetermined characteristic and serving as a first layer; and reference numeral 72 denotes an innermost layer formed from a material of high wear resistance and serving as a second layer. In the present embodiment, the base layer 71 and the innermost layer 72 are adjacent to each other and bonded-together by means of sintering. A bonding surface S21 is formed between the base layer 71 and the innermost layer 72.

In the present embodiment, the base layer 71 is formed from a material having high rigidity and toughness, serving as a first material, and having affinity for a material used to form the main body of the stationary mold 15 (FIG. 2). The innermost layer 72 is formed from a material having high wear resistance and serving as a second material.

Since the inner circumferential surface, which serves as a sliding surface, of the second sliding member 33 is formed on the innermost layer 72, in repeated use of the mold apparatus 14, wear of the sliding surface can be prevented, thereby enhancing the durability of the mold apparatus 14.

Since the material for the base layer 71 has affinity for a material used to form the main body of the stationary mold 15, good workability is provided in terms of attachment of the second sliding member 33 to the stationary mold 15.

As in the case of the first sliding member 32, preferably, hardness differs between a material used to form the outer circumferential surface; i.e., the sliding surface, of the weir member 37 and a material used to form the inner circumferential surface; i.e., the sliding surface, of the second sliding member 33. For example, in the case where the outermost layer 62 of the weir member 37 (FIG. 5) is formed from titanium nitride, the innermost layer 72 of the second sliding member 33 is formed from a material whose hardness is lower than that of titanium nitride. The outer circumferential surface; i.e., the sliding surface, of the weir member 37 serves as a first sliding surface. The inner circumferential surface; i.e., the sliding surface, of the second sliding member 33 serves as a second sliding surface.

Since hardness differs between a material used to form the outer circumferential surface; i.e., the sliding surface, of the weir member 37 and a material used to form the inner circumferential surface; i.e., the sliding surface, of the second sliding member 33, galling between the weir member 37 and the second sliding member 33 can be prevented.

Next, a second embodiment of the present invention will be described. Structural features similar to those of the first embodiment are denoted by common reference numerals, and repeated description thereof is omitted. For the effect that the second embodiment yields through employment of structural features similar to those of the first embodiment, the effect that the first embodiment yields is applied accordingly.

FIG. 8 is a sectional view showing a state of a compression molding machine in the second embodiment of the present invention as viewed at the time of start of mold closing.

In FIG. 8, reference numeral 35 denotes a sliding groove. A sliding portion 132 is formed along the radially inward circumferential surface of the sliding groove 35 in such a manner as to be integral with the stationary mold 15, which serves as a first mold. The weir member 37, which forms the outer circumferential edge of the cavity C, is disposed in the sliding groove 35 in such a manner as to be able to advance and retreat (to move leftward and rightward in FIG. 8). In association with advancement and retreat of the weir member 37, the outer circumferential surface of the sliding portion 132 and the inner circumferential surface of the weir member 37 slide on each other, the inner and outer circumferential surfaces serving as sliding surfaces. A slight clearance is formed between an inner circumferential surface of the main body of the stationary mold 15 and the outer circumferential surface of the weir member 37. Accordingly, the inner circumferential surface of the main body of the stationary mold 15 and the outer circumferential surface of the weir member 37 do not slide on each other.

The stationary mold 15 and the weir member 37 are manufactured by a discharge plasma sintering process. The sliding portion 132 having a predetermined thickness and assuming the form of a sintered portion is formed on the stationary mold 15, and also the weir member 37 is formed.

Next, a third embodiment of the present invention will be described. Structural features similar to those of the first embodiment are denoted by common reference numerals, and repeated description thereof is omitted. For the effect that the third embodiment yields through employment of structural features similar to those of the first embodiment, the effect that the first embodiment yields is applied accordingly.

FIG. 9 is a sectional view showing essential portions of an injection molding machine in the third embodiment of the present invention.

In FIG. 9, reference numeral 74 denotes a flow path formed in the stationary mold 15, which serves as a first mold. Temperature-regulated water, which serves as temperature-regulated medium, is fed from an unillustrated temperature regulator and flows through the flow path 74 so as to cool the stationary mold 15. Similarly, an unillustrated flow path is also formed in the movable mold 16, which serves as a second mold, and temperature-regulated water flows through the flow path so as to cool the movable mold 16.

Reference numeral 76 denotes a surface layer portion formed on the surface of the cavity wall 17 and having a substantially conical shape. The surface layer portion 76 consists of a sliding portion 77, which is formed on the surface of the front end (left end in FIG. 9) of the cavity wall 17, and an unsliding portion 78. Reference numeral 79 denotes an annular sliding portion formed on the surface of the rear end (left end in FIG. 9) of the core 18.

In the present embodiment, the stationary mold 15 and the movable mold 16 are entirely formed by a discharge plasma sintering process. The stationary mold 15 and the movable mold 16 respectively serve as sintered portions having a predetermined thickness.

Accordingly, by means of using a material of high wear resistance to form the sliding portion 77 and the sliding portion 79, wear of sliding surfaces consisting of the inner circumferential surface of the sliding portion 77 and the outer circumferential surface of the sliding portion 79 can be prevented. Thus, the durability of the mold apparatus 14 can be enhanced. By means of using a material of high thermal conductivity to form the unsliding portion 78, heat of unillustrated resin, which serves as a molding material, in the cavity C can be favorably transmitted to temperature-regulated water in the flow path 74 via the unsliding portion 78. Thus, the resin in the cavity C can be promptly cooled.

Notably, only regions corresponding to the surface layer portion 76 and the sliding portion 79 can be formed by a discharge plasma sintering process, whereby the surface layer portion 76 and the sliding portion 79 can constitute a sintered portion having a predetermined thickness. In this case, the surface layer portion 76 serves as a first mold member that in turn serves as at least a portion of the stationary mold 15. The sliding portion 79 serves as a second mold member that in turn serves as at least a portion of the movable mold 16. The first and second mold members are set as inserts on the stationary mold 15 and the movable mold 16, respectively.

Alternatively, a portion of the stationary mold 15 and a portion of the movable mold 16 assume the form of separate members. The separate members, and regions corresponding to the surface layer portion 76 and the sliding portion 79 can be formed by a discharge plasma sintering process, whereby the separate members, the surface layer portion 76, and the sliding portion 79 can constitute a sintered portion having a predetermined thickness. In this case, the separate member associated with the stationary mold 15, and the surface layer portion 76 collectively serve as a first mold member that in turn serves as at least a portion of the stationary mold 15. The separate member associated with the movable mold 16, and the sliding portion 79 collectively serve as a second mold member that in turn serves as at least a portion of the movable mold 16. The first and second mold members are set as inserts on the stationary mold 15 and the movable mold 16, respectively.

Next, a fourth embodiment of the present invention will be described. Structural features similar to those of the first embodiment are denoted by common reference numerals, and repeated description thereof is omitted. For the effect that the fourth embodiment yields through employment of structural features similar to those of the first embodiment, the effect that the first embodiment yields is applied accordingly.

FIG. 10 is a sectional view showing essential portions of an injection molding machine in the fourth embodiment of the present invention.

In FIG. 10, reference numeral 82 denotes a plurality of cylindrical guide grooves, which are formed at respectively predetermined positions on the stationary mold 15 and collectively serve as a first guide portion. Reference numeral 83 denotes a plurality of guide rods, which collectively serve as a second guide portion. As the movable mold 16, which serves as a second mold, advances or retreats (moves rightward or leftward in FIG. 10) in association with mold closing or opening, the guide rods 83 are inserted into the corresponding guide grooves 82. The guide rods 83 are mold members that constitute a portion of the movable mold 16.

In this case, each of the guide rods 83 includes an embedded portion 84, which is embedded in the movable mold 16 and serves as a first portion, and a sliding portion 85, which projects forward (rightward in FIG. 10) from the front end (right end in FIG. 10) of the movable mold 16 and is inserted into the corresponding guide groove 82.

In order to prevent wear of the circumferential surface, which serves as a sliding surface, of the sliding portion 85 in association with repeated use of the mold apparatus 14, the guide rods 83 are manufactured by a discharge plasma sintering process, and at least the sliding surface is formed from a wear resistant material. In this manner, the guides rods 83 are formed so as to collectively serve as a sintered portion, having a predetermined thickness, of the movable mold 16. Accordingly, wear of the sliding surface can be prevented, whereby the durability of the mold apparatus 14 can be enhanced.

The embedded portion 84 is formed from a material having affinity for the main body of the movable mold 16. Accordingly, good workability is provided in terms of attachment of the guide rods 83 to the movable mold 16.

Next will be described a fifth embodiment of the present invention for forming a molded product having a fine pattern on its surface, such as a light guide plate for guiding light from an incident section to an emissive section, a diffraction grating for diffracting light, or a disk substrate. Structural features similar to those of the first embodiment are denoted by common reference numerals, and repeated description thereof is omitted. For the effect that the fifth embodiment yields through employment of structural features similar to those of the first embodiment, the effect that the first embodiment yields is applied accordingly.

FIG. 11 is a sectional view showing a state of an injection molding machine in the fifth embodiment of the present invention as viewed before start of mold closing, and FIG. 12 is a sectional view showing a state of the injection molding machine in the fifth embodiment of the present invention as viewed at the time of mold clamping.

In this case, reference numeral 14 denotes the mold apparatus; reference numeral 15 denotes the stationary mold, which serves as a first mold; reference numeral 16 denotes the movable mold, which serves as a second mold; reference numeral 151 denotes a backing plate; reference 152 denotes an insert structure supported by the backing plate 151 and serving as a mold member; and reference numeral 153 denotes a mold plate disposed around the insert structure 152.

The insert structure 152 includes a base portion 154 supported by the backing plate 151 and serving as a first insert; a stamper 155 covering the front end surface (left end surface in FIGS. 11 and 12) of the base portion 154, removably attached to the base portion 154, and serving as a second insert; and a stamper retainer 156 fixed to the mold plate 153 by means of a bolt b1 and adapted to attach the stamper 155 to the base portion 154 at the outer circumferential edge of the stamper 155. An unillustrated fine pattern consisting of a plurality of pits is formed on the surface of the stamper 155 that faces the movable mold 16. The inner circumferential edge of the stamper 155 is fixed by means of an unillustrated stamper retainer.

The base portion 154 includes a main body portion 157 formed from a material having a predetermined characteristic and serving as a base layer that in turn serves as a first layer, and a contact portion 158 formed from a material having another predetermined characteristic and to a predetermined thickness on the front side (left side in FIGS. 11 and 12) of the main body portion 157 and serving as an outermost layer that in turn serves as a second layer. A bonding surface is formed between the main body portion 157 and the contact portion 158.

When the movable mold 16, which serves as a second mold, is advanced (moved rightward in FIG. 11) for mold clamping as shown in FIG. 12, a plurality of cavities C are formed between the stationary mold 15 and the movable mold 16. Unillustrated resin, which serves as a molding material, is charged into the cavities C and cooled. Accordingly, the fine pattern formed on the surface of the stamper 155 is transferred to the resin, whereby the resin in the cavities C become molded products. In the mold apparatus 14 for molding a disk substrate, a single circular cavity C is formed between the stationary mold 15 and the movable mold 16.

In an injection step, the resin in a molten condition of high temperature is charged into the cavities C. In a cooling step, the resin in the cavities C is cooled sufficiently for setting. Accordingly, the stamper 155 disposed in opposition to each of the cavities C is subjected to heat of the resin and thus expands in the injection step. Then, the stamper 155 is cooled and thus contracts in the cooling step.

As a result, the stamper 155 expands and contracts every molding cycle. The rear end surface (right end surface in FIG. 12) of the stamper 155 and the front end surface of the base portion 154 serve as contact surfaces and as sliding surfaces as well. Thus, the rear end surface of the stamper 155 and the front end surface of the base portion 154 slide on each other.

In order to prevent the rear end surface of the stamper 155 and the front end surface of the base portion 154 from wearing from sliding, the base portion 154 is manufactured by a discharge plasma sintering process. In this case, the base portion 154 serves as a sintered portion having a predetermined thickness.

In the present embodiment, the main body portion 157 is formed from a material having high rigidity and toughness; e.g., SUS304, and serving as a first material. The contact portion 158 is formed from a material having high wear resistance; e.g., titanium nitride (TiN), and serving as a second material. For use as the first material, SUS304 can be replaced with copper (Cu), titanium (Ti), or the like. For use as the second material, titanium nitride can be replaced with titanium oxide (TiO₂), boron nitride (BN), zirconium nitride (ZrN), cemented carbide (WC/Co), cubic boron nitride (CBN), zirconia (zirconium oxide ZrO₂), alumina (aluminum oxide Al₂O₃), silica (silicon dioxide SiO₂), titania (titanium dioxide TiO₂), silicon nitride (Si₃N₄), chromium oxide (CrO, Cr₂O₃, or CrO₃), cordierite, or the like.

Accordingly, in repeated use of the mold apparatus 14, wear of the front end surface, which serves as a contact surface, of the contact portion 158 can be prevented, thereby enhancing the durability of the mold apparatus 14.

Because of lack of need to perform a coating process, such as plating or vapor deposition, not only can work of manufacturing the insert structure 152 be simplified, but also time required for manufacturing the insert structure 152 can be shortened. Accordingly, the cost of the mold apparatus 14 can be lowered.

Since the contact portion 158 can be rendered sufficiently thick, the contact portion 158 is unlikely to be susceptible to the condition of the main body portion 157. For example, even when the main body portion 157 thermally expands, the contact portion 158 is free from separation and is not strained. Accordingly, the durability of the mold apparatus 14 can be enhanced.

Since the insert structure 152 has the main body portion 157, and the main body portion 157 is formed from a material of high rigidity and toughness, the insert structure 152 can have high rigidity and toughness.

In the present embodiment, the insert structure 152 is composed of the main body portion 157 and the contact portion 158. However, the insert structure 152 can be formed from a single material of high wear resistance; e.g., titanium nitride.

In the present embodiment, the main body portion 157 is formed from a material having high rigidity and toughness and serving as the first material. However, the main body portion 157 can be formed from a material of high thermal conductivity. In this case, heat of the resin in each of the cavities C can be favorably transmitted to temperature-regulated water, which serves as temperature-regulated medium, in an unillustrated flow path via the contact portion 158 and the main body portion 157 Thus, the resin in the cavities C can be promptly cooled.

Notably, only a region corresponding to the contact portion 158 can be formed by a discharge plasma sintering process, whereby the contact portion 158 can serve as a sintered portion having a predetermined thickness. In this case, the contact portion 158 serves as a mold member that in turn serves as at least a portion of the stationary mold 15. The mold member is set as an insert on the stationary mold 15.

Alternatively, a portion of the main body portion 157 assumes the form of a separate member. The separate member and a region corresponding to the contact portion 158 can be formed by a discharge plasma sintering process, whereby the separate member and the contact portion 158 can constitute a sintered portion having a predetermined thickness. In this case, the separate member associated with the stationary mold 15 and the contact portion 158 collectively serve as a mold member that in turn serves as at least a portion of the stationary mold 15. The mold member is set as an insert on the stationary mold 15.

In the case where SUS304 is used as the first material, and titanium nitride is used as the second material, the main body portion 157 is formed from a metal, whereas the coritact portion 158 is formed from ceramic. Accordingly, direct bonding of the main body portion 157 and the contact portion 158 causes generation of excessive stress in the bonded portion stemming from temperature variations. As a result, cracking, warpage, or a like problem arises in the base portion 154.

Next will be described a sixth embodiment of the present invention in which an intermediate layer is formed between the main body portion 157 and the contact portion 158 in order to cope with the above problem. Structural features similar to those of the fifth embodiment are denoted by common reference numerals, and repeated description thereof is omitted. For the effect that the sixth embodiment yields through employment of structural features similar to those of the fifth embodiment, the effect that the fifth embodiment yields is applied accordingly.

FIG. 13 is a sectional view showing a state of an injection molding machine in the sixth embodiment of the present invention as viewed before start of mold closing.

As shown in FIG. 13, the base portion 154, which serves as an insert, includes the main body portion 157 formed from a material having a predetermined characteristic and serving as a base layer that in turn serves as a first layer; the contact portion 158 formed from a material having another predetermined characteristic and serving as an outermost layer that in turn serves as a second layer; and a transition layer 159 disposed between the main body portion 157 and the contact portion 158 and serving as an intermediate layer that in turn serves as a third layer.

Preferably, the transition layer 159 is formed from a material that contains the first and second materials used to form the main body portion 157 and the contact portion 158, respectively; e.g., SUS304 and titanium nitride, in an amount of 50 wt.% each. In this case, the performance of bonding between the main body portion 157 and the transition layer 159 and that between the transition layer 159 and the contact portion 158 can be improved, so that the main body portion 157 and the transition layer 159 as well as the transition layer 159 and the contact portion 158 do not separate from each other. Accordingly, the base portion 154 is free from cracking, warpage, or the like.

The transition layer 159 can assume a multilayer structure such that SUS304 and titanium nitride contents are varied stepwise or continuously between a side toward the main body portion 157 and a side toward the contact portion 158.

In this case, for example, the transition layer 159 consists of layers that contain SUS304 and titanium nitride in an amount of: 90 and 10 wt.%, respectively; 80 and 20 wt.%, respectively; 70 and 30 wt.%, respectively; 60 and' 40 wt.%, respectively; 50 and 50 wt.%, respectively; 40 and 60 wt.%, respectively; 30 and 70 wt.%, respectively; 20 and 80 wt.%, respectively; and 10 and 90 wt.%, respectively.

When the transition layer 159 is multilayered to a greater extent as mentioned above, the performance of bonding between the base layer and the outermost layer is enhanced to a greater extent.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a molding machine for forming molded products.

## Claims

1. A mold apparatus **characterized by** comprising:
(a) a first mold; and
(b) a second mold disposed in such a manner as to be able to advance toward or retreat from the first mold; and **characterized in that**:
(c) at least either the first mold or the second mold has a sintered portion having a predetermined thickness.

2. A mold apparatus according to claim 1, wherein the sintered portion is formed on at least a sliding surface.

3. A mold apparatus according to claim 1, wherein the sintered portion is formed on at least a contact surface between a base portion and an insert.

4. A mold apparatus according to any one of claims 1 to 3, wherein the sintered portion is formed by means of sintering a sintering powder and comprises a base layer formed from a first material and an outermost layer formed from a second material.

5. A mold apparatus according to claim 4, wherein the first and second materials have different characteristics.

6. A mold apparatus according to claim 5, wherein the second material has high wear resistance.

7. A mold apparatus according to claim 4, wherein an intermediate layer formed from a material containing the first and second materials at predetermined contents is formed between the base layer and the outermost layer.

8. A mold apparatus according to claim 7, wherein, in the intermediate layer, the contents of the first and second materials are varied between a side toward the base layer and a side toward the outermost layer.

9. A mold apparatus according to claim 2, wherein the sliding surface comprises a first sliding surface and a second sliding surface formed from respective materials of different characteristics.

10. A method for manufacturing a mold apparatus, **characterized by** forming a mold apparatus by means of discharge-plasma-sintering a powder used to form a base layer and a wear-resistant material powder used to form an outermost layer.

11. A molding method **characterized by** comprising:
(a) a step of advancing a movable mold toward a stationary mold while a sintered portion formed on at least either the movable mold or the stationary mold slides on the other mold, thereby forming a cavity to be filled with a molding material between the movable mold and the stationary mold;
(b) a step of filling the cavity with the molding material;
(c) a step of cooling the molding material filling the cavity; and
(d) a step of retreating the movable mold from the stationary mold.

12. A molding method for forming a molded product by means of a stamper provided on at least one mold selected from a movable mold and a stationary mold, the stamper having a fine pattern formed thereon, comprising:
(a) a step of advancing the movable mold toward the stationary mold;
(b) a step of forming a cavity to be filled with a molding material between the movable mold and the stationary mold;
(c) a step of filling the cavity with the molding material, and causing the stamper to expand in a state in which the stamper is in contact with a stamper contact surface of the selected mold;
(d) a step of cooling the molding material filling the cavity, and causing the stamper to contract in a state in which the stamper is in contact with the stamper contact surface; and
(e) a step of retreating the movable mold from the stationary mold.

13. A molded product formed by a molding method according to claim 11 or 12.

14. A molding machine comprising a mold apparatus according to any one of claims 1 to 3.
